Europäisches Patentamt

European Patent Office

Office européen des brevets

(11) Publication number: **0 262 101 B1**

# EUROPEAN PATENT SPECIFICATION

(45) Date of publication of patent specification: **15.05.91**  (51) Int. Cl.⁵: **A01C 7/04**

(21) Application number: **87830319.7**

(22) Date of filing: **07.09.87**

(54) **Apparatus for arranging at given positions one article of small size at a time from a bulk of these articles, in particular plant seeds.**

(30) Priority: **10.09.86 IT 2166586**

(43) Date of publication of application:
**30.03.88 Bulletin 88/13**

(45) Publication of the grant of the patent:
**15.05.91 Bulletin 91/20**

(84) Designated Contracting States:
**DE ES FR GB NL**

(56) References cited:
**FR-A- 2 349 520**
**GB-A- 2 126 063**
**US-A- 3 788 518**
**US-A- 4 480 765**

(73) Proprietor: **IMAC ITALIA S.n.c. di ORIOLI G. & FORMICA C.**
**Via A. Volta, 22**
**Castelnovo Sotto Reggio Emilia(IT)**

(72) Inventor: **Orioli, Giacomo**
**Via A. Toscanini, 3**
**I-42024 Castelnovo Sotto Reggio Emilia(IT)**
Inventor: **Formica, Claudio**
**Via Palazzolo, 7**
**I-42100 Reggio Emilia(IT)**

(74) Representative: **Adorno, Silvano et al**
**c/o SOCIETA' ITALIANA BREVETTI S.p.A. Via Carducci, 8**
**I-20123 Milano(IT)**

## Description

The present invention relates to an apparatus for arranging at given positions one article of small size at a time from a bulk of these articles, in particular plant seeds.

Machines are known which can take one article at a time from a mass of articles having all a small size and the same nature, and then project the same towards a given location, such as according to previous Italian patent applications No. 46858 A/82 and No. 21122 A/85 in the name of the present applicant. These machines especially employed to sow seedbeds or sowing pans or trays woth seeds of small and very small size, so as to require up to about 15,000 units to form a mass of 1 g (e.g. in the case of petunia seeds), show however some drawbacks.

It is true that the late patent application No. 21122 A/85 was an attempt to solve the problem of possible damages to the seeds as they are taken, by avoiding that the picking nozzle will plunge heavily downwards into the bulk of seeds, but instead causing it to be covered up by the bulk itself during a downward movement while passing through the bulk container bottom.

However the danger of damages still exists and in addition the possibility cannot be excluded that more than one seed at a time will be taken by the nozzle and carried to the deposit location, what should be avoided because seedlings need to grow spaced apart of a sufficient distance for having a normal growth.

Therefore an object of the present invention is that of providing an apparatus of the said type which does not show the above-mentioned drawbacks as it is based on the principle of having, in place of a nozzle moving within the bulk of seeds in order to take one at a time, a situation according to which the seeds themselves move to "meet" a stationary nozzle at a predetermined picking position, and only one of them is drawn by the nozzle, more precisely the first one that causes the end orifice of the nozzle, wherein a slight vacuum is generated, to be at least partially closed.

The apparatus according to the invention, which will be described in the following by exclusive reference to the distribution of seeds, could also be used in connection with articles of other nature having however size and density similar thereto and is characterized by comprising at least one distributing unit substantially formed of a channel-shaped container chamber within which there is mounted, on a rotatable shaft, an element provided with peripheral flexible blades of such a length to touch the bottom of said chamber for collecting some of the mass of seeds on said bottom and causing the same to fall down again at a front portion of said chamber, where is mounted a picking and carrying nozzle which is movable between a first position, substantially coincident with the vertical line of drop by gravity of the seeds upon their release from said blades during rotation thereof, and a second position of discharge for the seed kept thereon at each time, there being provided suction means to produce a slight vacuum in said nozzle, being connected therewith through a manifold alternately to a pressurized air source; the electrovalves for connecting said manifold with the vacuum or the pressurized air being controlled by cam means synchronized with the movement of said nozzle which is in turn controlled by the shaft of said rotating element with blades, provided with an actuating motor.

According to a preferred embodiment, the blades on said rotating element are provided in number of two, diametrally opposed and, in order to occupy said first position at each time a blade has reached a position at which the mass of seeds collected by the same blade starts to fall down, the nozzles make a double rotation in two opposite directions by an angle of e.g. 180° at each complete revolution of said rotating element.

In a particular embodiment such a rotating element or body may be formed of a single rubber moulding, integral with the blades, possibly comprised of two parts with semi-circular shape having two distinct centres, spaced apart and mutually aligned on the diametral plane defined by said blades.

As it will be better seen later on, the apparatus of the invention preferably comprises a given number (up to ten or more) of distributing units as defined before, arranged side by side, whose rotating bodies are mounted on the same shaft mechanically linked to a cam controlling the resulting alternate oscillation, in two opposite directions, of a shaft parallel to the first one, on which the nozzles are mounted, each corresponding to an associate distributing unit. Another cam actuates the operation of the electrovalves for controlling the connection of the nozzle feeding manifold with either the vacuum or the pressurized air.

These and further objects, advantages and features of the present invention will be clear to those skilled in the art, by the following detailed description of an embodiment thereof, given by way of non-limiting example with reference to the annexed drawings, in which:

Figure 1 shows a diagrammatic plan view of the apparatus according to the invention showing only some of the distributing units arranged side by side which form the apparatus, partially in cross-section;

Figures 2a and 2b both show a cross section view taken along line II-II of Fig. 1, in two successive operating steps of the apparatus; and

Figure 3 shows a preferred embodiment of the rotating body with collecting blades.

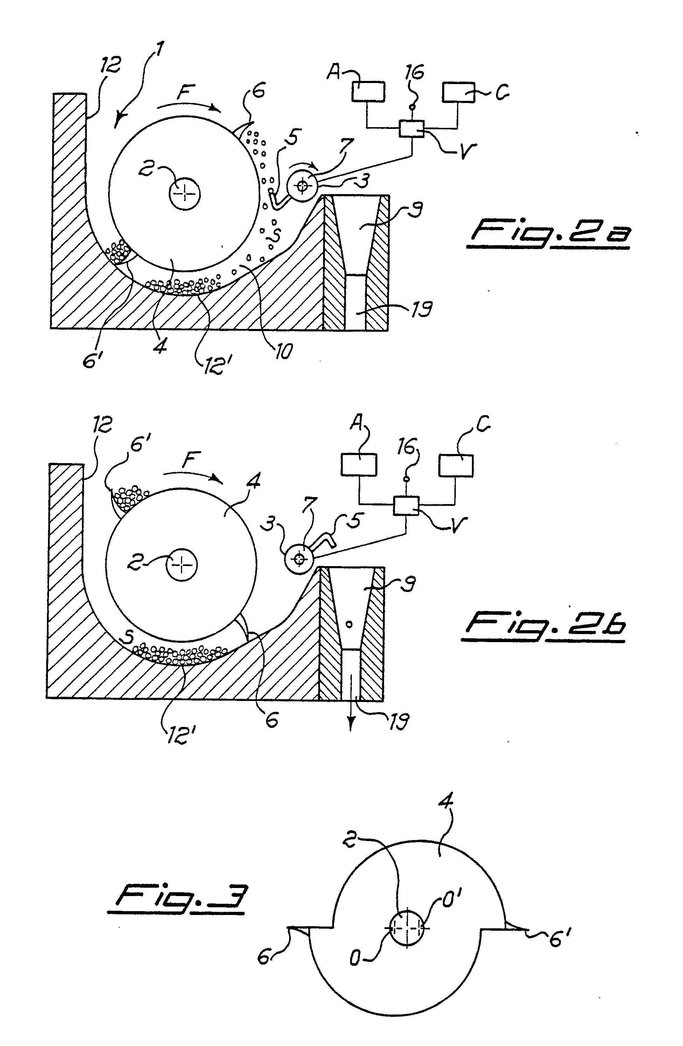

With reference to the drawings, the apparatus of the invention comprises a multiplicity of distributing units 1, 1', ... arranged side by side and mutually spaced apart by lateral walls 11 which are joined each other by a front wall 12 being connected or integral to a channel-shaped bottom wall 12', as it is better seen in Figs. 2a and 2b. With this arrangement each distributing unit defines a container chamber 10, closed at the bottom, capable of containing a given quantity of seeds S to be distributed and arranged one at a time. Within each chamber 10, which can be open to the outside at the upper and front portion, a generally disc-shaped body 4 is fixedly mounted on a shaft 2 which in turn is rotatably supported at its ends by the side walls 11 being parallel thereto. The periphery of the body 4 has substantially the same distance from the bottom 12' of the chamber also during the rotation. In Figs. 2a, 2b the rotating body has been represented with a circular cross-section and having a distance from the bottom 12' of the container chamber which is slightly decreasing in the direction of rotation of the shaft 2, as shown by arrow F. However the shape of the rotating disc 4 could be different, such as an eccentric of the type shown in Fig. 3, in which case it is formed of two portions of semicircular cross-section integrally joined along a diametral plane in a staggered manner having the centres 0, 0' of the two semi-circumferences spaced apart from opposite sides of the axis 2.

In any case the rotating body 4 is provided on its outer periphery with at least one blade 6, designed to "sweep" the seeds S gathered on the bottom 12' and to bring them upwards, along the rising portion of its path, then causing the same to fall down during the phase of descent. These blades 6 will be flexible to improve the collection of seeds from the bottom of chamber 10 and, also to this purpose, the periphery of rotating body 4 and the bottom wall 12' (the latter. up to the zone where it joins the front wall 12, or better the rear portion thereof) will be shaped so as to help seed collecting by having a m utual distance which is gradually decreasing in the direction of rotation F until nearly the lowest point of the bottom 12', and then is kept substantially constant along a certain length of the rear wall 12 before increasing at departure of the rotor body from the latter. Since the blades 6, 6' are preferably in number of two, diametrally opposite, as shown in the drawings, a possible peripheral shaping, if it is the case of the eccentric type like in Fig. 3, will have to be repeated thus forming radial projections which with the aid of the flexible blades enhance the collecting action by "picking out" in the bulk on the bottom 12'.

The rotating bodies 4 of every distributing unit 1 are of course all mounted on the same shaft 2 which extends itself across the apparatus by passing through pairs of adjacent side walls 11, and at the same moment the blades 6, 6' will have the same orientation on all the rotating bodies 4, whereby the operations of collecting and discharging seeds S will be accomplished at the same time for all units 1.

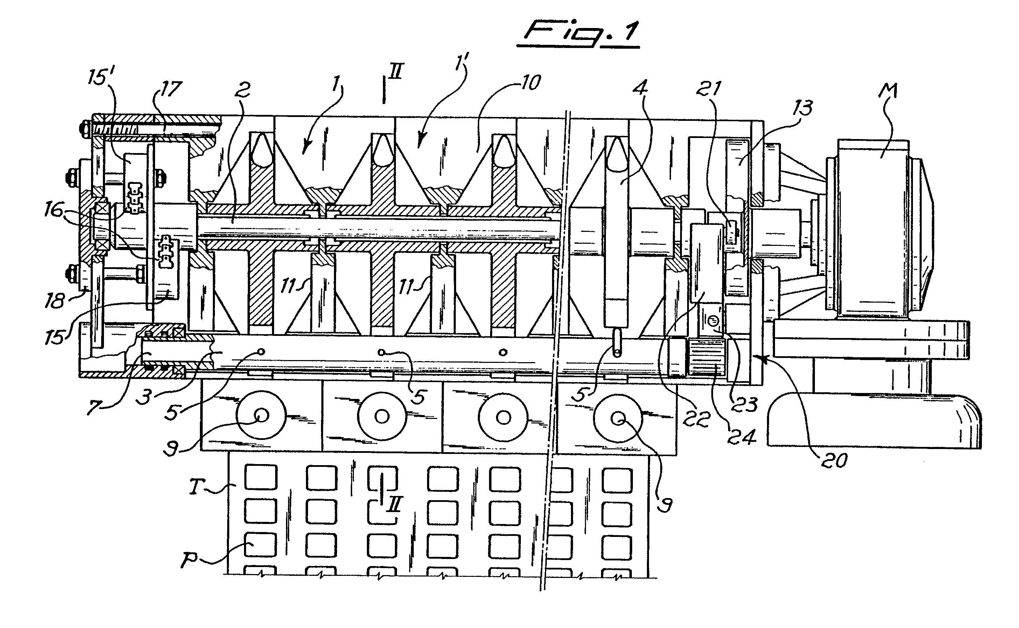

As diagrammatically shown in Fig. 1, a main motor M causes the unidirectional rotation of shaft 2, which in turn, such as by a usual toothed gearing generally designated 20, drives a shaft 3 parallel to the shaft 2 and frontally mounted with respect thereto in the direction of rotation of arrow F. The drive is preferably transmitted by means of a cam 13 so designed to cause rotation of the shaft 3, alternately in two opposite directions, by a determined angle from an axial vertical plane. This can be obtained e.g. by forming the cam 13 hollow and providing an associate roller mounted for rotating on a spindle integral with an arm 22 which is adapted to drive with a vertical traverse, as dictated by the cam profile, a rack 23. The latter, being slidably guided along a rod 23', can in turn cause a pinion 24 to rotate, which is directly mounted on the shaft 3 and meshes with said rack so as to define a predetermined gear ratio. All this kinematic system forms in this case the drive unit 20.

Nozzles 5, one for each distributing unit, are mounted on the shaft 3 and, as a consequence of the above mentioned oscillating motion of said shaft, they move alternately from a first position such as shown in Fig. 2a to a second position as represented in Fig. 2b. In the embodiment shown the oscillation of the shaft 3 and thereby of the nozzles 5 is about 180°, and has to be completed in both the opposite directions of the alternate motion between two passages in succession of the same blade. This means that in the case as shown of two blades, 6 and 6', at each complete revolution of the rotating body 4, and thereby of the shaft 2, the shaft 3 will have to accomplish the to and fro oscillation twice, hence with a double frequency. Therefore the gearing system 20 will have such a gear ratio as to multiply the rotational speed by the number of blades 6, 6' on the periphery of body 4, while reversing each time the rotation direction. Furthermore the cam 13 will be so shaped to give shaft 2 the necessary oscillation amplitude in synchronism with the rotation of body 4, in particular with the position of blades 6, 6'.

The nozzle 5 will be in fact at the above-mentioned first position, where it is struck by the falling mass of seeds S, when one of the blades begins its descending path, whereas the nozzle will have to clear such a position upon passage of the blade, then reaching the second position of Fig. 2b at which it discharges the seed caught in the first stage into a small stationary hopper as will be better explained in the following. Subsequently the nozzle will come back to the first position while the next blade is approaching with its mass of seeds which shortly thereafter will start to fall down by gravity about the nozzle 5 and so on.

The nozzles 5 are in practice formed of small tubes or needles protruding from the shaft 3 and communicating with the hollow inside thereof 7 which substantially provides a manifold alternately connected with a vacuum source A and a pressurized air source C as diagrammatically shown in Figs. 2a and 2b. Known electrovalves V control the connection of A or respectively C with the manifold 7 and are actuated synchronously with the operating cycle of the apparatus, such as by microswitches 16 provided on cams 15, 15' rotating with the shaft 2 and preferably mounted at the end thereof which is opposed to the end on which the cam 13 is mounted for the actuation of the mechanical drive of the shaft 3.

As readily results from the foregoing description, the operation of the apparatus according to the invention is the following: the bulk mass of seeds to be individually distributed by arrangement in each seat or location P of a tray T for seedlings to be transplanted, upon filling thereof with soil, is abundantly fed into each chamber 10 relating to the various distributing units 1, 1' etc. in a number corresponding to the number of locations P provided transversely on the tray T which at the same time is caused to move forward in a longitudinal direction, as it is for example positioned on a conveyor belt (not shown).

Once motor M starts to run, the rotating bodies 4 start their rotation at a not too high speed, such as of about 30 r.p.m. in order to avoid that an excessive centrifugal force may scatter the seeds S outwardly. In the meantime also the shaft 3 oscillates, as it is synchronized to bring nozzles 5 to the so-called first position shown in Fig. 2a as soon as one of the collecting blades 6 starts its downward path, to receive all around itself a hail of freely falling seeds S. At the same time the electrovalves V, operated by the controls 16 according to the position of the cams 15, 15', cause the manifold 7 to be in communication with the vacuum source A thus giving rise to a suction action at the inside thereof. This suction action is also present at the various nozzles 5 with a slight suction force near their orifices, that is however sufficient to modify the falling path of the seeds in the vicinity of an orifice, which then will reach the latter. The diameter of this orifice has been calculated previously as a function of the average size of the seeds S to be accommodated and should be less than such a size, e.g. with a ratio of about 2/3 with respect thereto, so that the first seed which adheres on the nozzle port will obstruct the same totally or leave a minimum portion clear, if any, the suction force of which will be inadequate to cause another seed to be attracted, whereby any possibility of catching two or more seeds at a time is prevented.

At this stage, as already stated above, the nozzle 5 reaches the discharge position of Fig. 2b and allows the blade 6 to pass during the continued rotation of the latter, while the valves V are in the meantime switched onto C in order to allow a weak blow of pressurized air suitable to balance to zero the previous vacuum in a very short time. Thereby the seed falls into the hopper 9 and therefrom to an underlying conduit 19, in practice thrustless but only due to its own weight. Thereafter while the blade 6 in the bottom zone 12' starts again to collect the seeds S just fallen and the opposite blade 6' is going to reach the top of its path with a load of previously drawn seeds, nozzle 5 returns to its first catching position, possibly passing through an intermediate step wherein, before being communicated with A, manifold 7 is instantly connected to C for receiving a very short blow of pressurized air having a greater intensity than during the step of seed discharge This has the purpose of clearing the very small orifice of the nozzle from possible impurities (dust, fragments, etc.) among the seeds. Then the cycle is repeated, while it should be appreciated that the forward feeding speed of the tray T is related to the rotation speed of shafts 2, 3, as it has to be fed forward by one line of sowing locations P at each oscillation period of the shaft 3, that is of 60 cycles/min according to the example above of 30 r.p.m. for the shaft 2 of rotating bodies 4, whereby the forward movement would be of one line at each second.

Of course the transverse size of the apparatus cannot be too much greater than that of the tray T thereunder, whereby the number of units 1, 1' provided side by side cannot be higher than a given value, as the minimum size of each unit is usually larger than a seedling pan P. Therefore the apparatus can be designed as formed of a plurality of assemblies of distributing units provided with a plurality of shafts in parallel each other, by making use of the same general controls for all the units and having the guide conduits 1a for the seeds from the hopper 9 to each location P shaped accordingly. With such an arrangement the apparatus keeps a reduced axial size without negatively affecting the productivity i.e. the forward movement speed of the tray T.

It should also be appreciated that the special modular mounting of the units arranged side by side to form the apparatus of the invention allows to modify the number of the units themselves, by increasing or decreasing the same (according to the width of tray T) by means of a simple operation of replacing the rotation shafts upon disassembly and re-assembly of the frame cross members 17 such as tie rods and the side end plates 18 through bolts.

It is clear that with the apparatus of the invention not only more than one single seed cannot be deposited at the same location, but the seeds are also guaranteed to be prevented from damages. The processing of the seeds occurs in fact without any shocking mechanical action thereon, both in the step of collection by means of a flexible blade, and during their free fall when the seeds themselves "look for" the nozzle onto which they will adhere with no strong hit, whereas according to the prior art it was the latter, with its greater mass and inertia, which acted on the seeds, thus giving rise to considerably higher mechanical forces.

Obviously this apparatus can be also used for the distribution and location, and differentiated positions, of single articles not being seeds, taken from a bulk mass of these articles.

## Claims

1. An apparatus for arranging at given positions one article of small size at a time from a bulk of these articles such as plant seeds (S), characterized by comprising at least one distributing unit (1, 1', ...) substantially formed of a channel-shaped container chamber (10) within which there is mounted, on a rotatable shaft (2), a disc-shaped body (4) provided with peripheral flexible blades (6, 6') of such a length to touch the bottom (12') of said chamber (10) for colleoting some of the mass of seeds (S) on said bottom (12'), and causing the same to fall down again at a front portion of said chamber (10), where a picking and carrying nozzle (5) is mounted which is alternately rockable with a 180° to and fro rotation between a first position, substantially coincident with the vertical line of drop by gravity of the seeds (S) upon their release from said blades (6) during the rotation thereof, and a second position of discharge for the seed kept thereon at each time, there being provided suction means (A) to produce a slight vacuum in said nozzle (5), being connected therewith through a manifold (7) alternately to a pressurized air source (C); electrovalves (V) for connecting said manifold (7) with vacuum (A) or pressurized air source (C) being controlled by cam means (15, 16) synchronized with the rocking movement of said nozzle (5) which is in turn controlled by the shaft (2) of said rotating body (4) with blades, provided with an actuating motor (M).

2. An apparatus according to claim 1, characterized by the fact that the nozzles (5) of all the distributing units (1, 1', ...) are all mounted on one common shaft (3) parallel to said shaft (2) by which it is driven, through a cam (1 3) mounted on the latter and a drive assembly (20), with an oscillating periodic movement, alternately in both directions, by a given angle with respect to a vertical axial plane of said shaft (3), the end positions of which correspond, respectively, to said first and second position of the nozzle (5).

3. An apparatus according to claim 2, characterized by the fact that said manifold (7) is formed at the inside of said shaft (3) being hollow and said means for controlling the electrovalves (V) are microswitches (16) mounted on cams (15, 15') which are connected for rotation to said shaft (2) at the end thereof which is opposed to the end where said cam (13) is mounted.

4. An apparatus according to claim 2, characterized by the fact that said blades (6, 6') on said rotating body (4) are in number of two, diametrally opposed, and the synchronization between shafts (2) and (3), controlled by the cam (13) and drive (20), is such that with the nozzle (5) at said first position, one of said blades (6, 6') begins the descending portion of its path, when the mass of seeds (S) collected by it starts to fall by gravity, with the shaft (3) and thereby each nozzle (5) oscillating twice in both opposite directions by the said angle at each complete revolution of said shaft.

5. An apparatus according to claim 3 or 4, wherein said manifold (7) and thereby each nozzle (5) are connected with said vacuum source (A) when the nozzles (5) are at said first position, and with said pressurized air source (C) when they are at said second position.

6. An apparatus according to claim 5, wherein at an intermediate position between said first and second positions said manifold (7) and each nozzle (5) are connected with said pressurized air source (C), the pressure of air blown at such a position being higher than that corresponding to said second position.

7. An apparatus according to claim 4, wherein said rotating body (4) is formed as an integral moulding of rubber, together with the blades (6, 6'), comprised of two portions with semicircular cross-section, the centres of which are symmetrically spaced apart with respect to the central rotation axis and aligned on a diametral plane defined by said blades.

8. An apparatus according to one or more of the preceding claims, comprising a plurality of said distributing units (1, 1', ...) positioned side by side and modularly assembled by means of tie rod cross members (17) and side end plates (18) to be disassembled and re-assembled, with said shaft (2) passing through the side walls (11) of each of said units.

9. An apparatus according to claim 8, wherein each of said second positions of the nozzles (5) is associated with a small hopper (9) and conduit (19) for guiding the seed (S) when let to drop from the nozzle (5) for its positioning at a seedling seat or location (P) associated with each conduit (19) and distributing unit (1), among a multiplicity of these locations (P) arranged to form a matrix of lines and rows in a tray (T) underlying said apparatus and suitable to move forward by one line at each operating cycle of the apparatus which corresponds to an oscillation of each nozzle (5).

10. An apparatus according to claim 9, the size of which in a transverse direction to the forward movement of said trays (T), substantially equal to the length of shafts (2,3), corresponds to the size of a number of distributing units (1, 1'...) arranged side by side, which is a submultiple of the number of locations (P) forming each line of the tray (T), whereby a multiplicity of assemblies of said units are provided being combined in the same apparatus, with common controls in parallel, all with the same transverse size and suitable to arrange at the same time single seeds, one in each location (P) through shaped guiding conduits (19) having different lengths.

11. An apparatus according to one or more of the preceding claims, characterized by the fact that each of said nozzles (5) has an end orifice of lower size than the seeds (S), with a diameter equal to or less than 2/3 of the average diameter size of the seeds.

**Revendications**

1. Appareil pour prélever des articles de petite taille, stockés en tas, et les déposer un par un à certaines positions données, en particulier des graines de plantes (S), caractérisé en ce que ledit appareil comprend au moins une unité de distribution (1,1',...) constituée essentiellement d'une chambre de stockage (10) en forme de canal, à l'intérieur de laquelle est monté, sur un arbre rotatif (2), un corps en forme de disque (4) doté de lames flexibles périphériques (6,6'), dont la longueur est telle qu'elles touchent le fond (12') de ladite chambre (10) afin de prélever une certaine quantité de graines (S) reposant en tas sur ledit sol (12') et faire retomber lesdites graines dans une partie frontale de ladite chambre (10), où est montée une buse de prélèvement et de transport (5) qui peut effectuer des mouvements de bascule alternatifs de 180 ° entre une première position, qui coïncide essentiellement avec la trajectoire verticale de chute par gravité des graines (S) lorsqu'elles quittent lesdites lames (6) en rotation, et une seconde position de déchargement de la graine qui est restée sur la buse, un dispositif d'aspiration (A) prévu pour produire un léger vide dans ladite buse (5), étant raccordé à cette dernière par l'intermédiaire d'un distributeur (7) en alternance avec une source d'air sous pression (C) ; des électrovannes (V) permettant de raccorder ledit distributeur (7) au vide (A) ou à la source d'air sous pression (C) étant commandées par des cames (15,16) synchrones avec le mouvement de bascule de ladite buse (5), qui est également commandé par l'arbre (2) dudit corps rotatif (4), lequel est doté de lames et entraîné par un moteur (M).

2. Appareil selon la revendication 1, caractérisé en ce que les buses (5) de toutes les unités de distribution (1,1',...) sont montées sur un arbre commun (3) parallèle audit arbre (2) et par lequel il est entraîné au moyen d'une came (13) montée sur ce dernier et d'un dispositif d'entraînement (20), animé d'un mouvement d'oscillation périodique (alternativement dans les deux sens) d'un angle donné par rapport à un plan axial vertical dudit arbre (3), et dont les positions extrêmes correspondent, respectivement, aux première et seconde positions de la buse (5).

3. Appareil selon la revendication 2, caractérisé en ce que ledit distributeur (7) est formé à l'intérieur dudit arbre (3) qui est creux, et en ce que lesdits dispositifs de commande des électrovannes (V) sont des micro-contacts (16) montés sur des cames (15,15'), reliées en rotation audit arbre (2) à l'extrémité opposée à celle où est montée ladite came (13).

4. Appareil selon la revendication 2, caractérisé en ce que ledit corps rotatif (4) est doté de deux lames (6,6') diamétralement opposées et en ce que la synchronisation entre les arbres (2) et (3), assurée par la came (13) et le dispositif d'entraînement (20), est telle que lorsque la buse (5) occupe la première position, l'une desdites lames (6,6') entame la portion descendante de sa trajectoire, quand la quantité de graines (S) prélevées par elle commence à tomber par gravité, l'arbre (3) et par-là même chaque buse (5) oscillant deux fois dans les deux sens opposés, en décrivant ledit angle, à chaque tour complet dudit arbre.

5. Appareil selon la revendication 3 ou 4, caractérisé en ce que le distributeur (7) et par-là même chaque buse (5) sont raccordés à ladite source d'aspiration (A) quand les buses (5) occupent la première position, et à ladite source d'air sous pression (C) quand les buses occupent la seconde position.

6. Appareil selon la revendication 5, caractérisé en ce que, à une position intermédiaire située entre la première et la seconde positions, ledit distributeur (7) ainsi que chaque buse (5) sont raccordés à ladite source d'air sous pression (C), la pression d'air insufflé à une telle position étant supérieure à celle correspondant à ladite seconde position.

7. Appareil selon la revendication 4, caractérisé en ce que ledit corps rotatif (4) est constitué d'une pièce monobloc en caoutchouc moulé avec les lames (6,6'), composée de deux parties de section semi-circulaire, dont les centres respectifs sont disposés symétriquement par rapport à l'axe de rotation central et alignés sur un plan radial défini par lesdites lames.

8. Appareil selon une ou plusieurs des revendications précédentes, caractérisé en ce qu'il comprend plusieurs desdites unités de distribution (1,1',...) positionnées côte à côte et assemblées de façon modulaire au moyen de tiges d'assemblage transversales (17) et de brides latérales (18) qui se montent et se démontent, ledit arbre (2) passant à travers les parois latérales (11) de chacune desdites unités.

9. Appareil selon la revendication 8, caractérisé en ce que chacune desdites secondes positions des buses (5) est associée à une petite trémie (9) et un conduit (19) qui guident la graine (S) lorsqu'elle tombe de la buse (5) afin de la déposer dans un poquet ou un emplacement (P) associé à chaque conduit (19) et unité de distribution (1), parmi un grand nombre d'emplacements (P) arrangés en une matrice de lignes et de rangées dans un plateau (T) situé au-dessous dudit appareil et adapté pour avancer d'une ligne à chaque cycle de l'appareil, ce qui correspond à une oscillation de chaque buse (5).

10. Appareil selon la revendication 9, caractérisé en ce que sa dimension dans une direction perpendiculaire au mouvement d'avance desdits plateaux (T) est essentiellement égale à la longueur des arbres (2,3) et correspond à la dimension d'un certain nombre d'unités de distribution (1,1',...) disposées côte à côte, lequel nombre est un sous-multiple du nombre d'emplacements (P) formant chaque ligne du plateau (T), plusieurs assemblages desdites unités étant fournis combinés dans le même appareil, avec des commandes communes parallèles, tous de même dimension transversale et adaptés pour déposer simultanément et individuellement des graines - une dans chaque emplacement (P) - à travers des conduits de guidage profilés (19) de longueurs différentes.

11. Appareil selon une ou plusieurs des revendications précédentes, caractérisé en ce que chacune desdites buses (5) présente un orifice final plus petit que les graines (S), de diamètre égal ou inférieur à 2/3 du diamètre moyen des graines.

## Ansprüche

1. Ein Apparat für die Anordnung jeweils eines Artikels geringer Größe aus einer großen Menge dieser Artikel, wie z.B. Pflanzensamen (S), in bestimmten Positionen, **dadurch gekennzeichnet,** daß er wenigstens eine Verteileinheit (1, 1', ...) enthält, die im wesentlichen aus einer kanalförmigen Behälterkammer (10) besteht, in der an einer drehbaren Welle (2) ein scheibenförmiger Körper (4) angebracht ist, der am Kreisumfang mit flexiblen Flügeln (6, 6') von einer solchen Länge versehen ist, daß sie den Boden (12') der genannten Kammer (10) berühren, um einen Teil der auf dem genannten Boden (12') befindlichen Samenmasse (S) aufzunehmen und im vorderen Teil der genannten Kammer (10) wieder fallenzulassen, wo sich eine Lese- und Transportdüse (5) befindet, die mit einer Hin- und Her-Drehung von 180° abwechselnd zwischen einer ersten Position, die sich im wesentlichen mit der vertikalen Schwerkraft-Fallinie der Samen (S) deckt, wenn diese von den genannten Flügeln (6) während der Drehbewegung freigegeben werden, und einer zweiten Position zur Freigabe des jeweils darauf befindlichen Samens abwechselnd hin und her bewegt werden kann, wobei Saugmittel (A) vorgesehen sind, um einen geringen Unterdruck in der genannten Düse (5) zu erzeugen, die damit über einen Verteiler (7) abwechselnd mit einer Druckluftquelle (C), Magnetventilen (V) für die Verbindung des genannten Verteilers (7) mit dem Unterdruck (A) oder der Druckluftquelle (C) verbunden ist, wobei die Steuerung durch Nokkenmittel (15, 16) erfolgt, die mit der Schwingbewegung der genannten Düse (5) synchronisiert sind, die wiederum von der Welle (2) des genannten rotierenden Körpers (4) mit Flügeln, versehen mit einem Betätigungsmotor (M), gesteuert wird.

2. Ein Apparat nach Anspruch 1, **dadurch gekennzeichnet,** daß die Düsen (5) aller Verteileinheiten (1, 1', ...) alle an einer gemeinsamen Welle (3) parallel zu der genannten Welle (2) angebracht sind, durch die sie über einen an letzterer angebrachten Nocken (13) und eine Antriebseinheit (20) mit einer periodischen Schwingbewegung abwechselnd in beiden Richtungen in einem bestimmten Winkel zur vertikalen Längsebene der genannten Welle (3) angetrieben werden, deren Endpositionen jeweils der ersten bzw. zweiten Position der Düse (5) entsprechen.

3. Ein Apparat nach Anspruch 2, **dadurch gekennzeichnet,** daß der genannte Verteiler (7) an der Innenseite der genannten Welle (3), die hohl ist, ausgebildet ist und daß es sich bei den genannten Mitteln für die Steuerung der Magnetventile (V) um Mikroschalter (16) handelt, die an Nocken (15, 15') angebracht sind, welche zur Erzeugung der Drehbewegung mit dem Ende der genannten Welle (2) verbunden sind, das dem Ende gegenüberliegt, woran sich der genannte Nocken (13) befindet.

4. Ein Apparat nach Anspruch 2, **dadurch gekennzeichnet,** daß die genannten Flügel (6, 6') am genannten rotierenden Körper (4) zwei diametral einander gegenüberliegende Flügel sind und die Synchronisierung zwischen den Wellen (2) und (3), die durch den Nocken (13) und den Antrieb (20) gesteuert wird, so beschaffen ist, daß, wenn sich die Düse (5) in der genannten ersten Position befindet, einer der genannten Flügel (6, 6') mit dem abwärts gerichteten Teil seiner Bewegung beginnt, wenn die Masse der davon aufgenommenen Samen (S) aufgrund der Schwerkraft herabzufallen beginnt, während die Welle (3) und dadurch jede Düse (5) bei jeder vollständigen Umdrehung der genannten Welle zweimal in beiden, einander entgegengesetzten Richtungen um den genannten Winkel geschwenkt wird.

5. Ein Apparat nach Anspruch 3 oder 4, wobei der genannte Verteiler (7) und dadurch jede Düse (5) mit der genannten Unterdruckquelle (A) verbunden sind, wenn sich die Düsen (5) in der genannten ersten Position befinden, und mit der genannten Druckluftquelle (C), wenn sie sich in der genannten zweiten Position befinden.

6. Ein Apparat nach Anspruch 5, bei dem der genannte Verteiler (7) und jede Düse (5) bei Erreichen einer Zwischenstellung zwischen der genannten ersten und der genannten zweiten Position mit der genannten Druckluftquelle (C) verbunden sind, wobei der Druck der in einer solchen Position eingeblasenen Luft höher ist als der der genannten zweiten Position entsprechende Druck.

7. Ein Apparat nach Anspruch 4, wobei der genannte rotierende Körper (4) als Integral-Gummipreßteil zusammen mit den Flügeln (6, 6') ausgebildet ist, bestehend aus zwei Teilen mit halbkreisförmigem Querschnitt, deren Mittelpunkte im Verhältnis zur zentralen Rotationsachse in symmetrischen Abständen angeordnet und an einer durch die genannten Flügel begrenzten diametralen Ebene ausgefluchtet sind.

8. Ein Apparat nach einem oder mehreren der vorherigen Ansprüche, enthaltend eine Vielzahl der genannten Verteileinheiten (1, 1', ...), die nebeneinander angeordnet und mit Hilfe von Verbindungsstangen-Traversen (17) und seitlichen Endplatten (18) modulartig zusammengefügt sind, um eine Zerlegung und einen Wiederzusammenbau zu ermöglichen, während die genannte Welle (2) durch die Seitenwände (11) jeder der genannten Einheiten verläuft.

9. Ein Apparat nach Anspruch 8, wobei jede der genannten zweiten Positionen der Düsen (5) einem kleinen Trichter (9) und einer Leitung (19) zugeordnet ist, um den Samen (S) zu führen, wenn dieser aus der Düse (9) herabfällt, und um diesen in ein Sämling-Loch oder an einer Stelle (P) einzusetzen, die jeder einzelnen Leitung (19) und Verteileinheit (1) zugeordnet ist, im Rahmen einer Vielzahl dieser Stellen (P), die zu einem Muster von Linien und Reihen in einer Schale (T) angeordnet sind, die sich unter dem genannten Apparat befindet und die bei jedem Betätigungszyklus des Apparats, der einer Schwingbewegung jeder Düse (5) entspricht, um jeweils eine Linie nach vorn bewegt werden kann.

10. Ein Apparat nach Anspruch 9, dessen Größe in Querrichtung zur Vorwärtsbewegung der genannten Schalen (T), im wesentlichen gleich der Länge der Wellen (2, 3), der Anzahl von nebeneinander angeordneten Verteileinheiten (1, 1', ...) entspricht, die mehrfach in der Anzahl von Stellen (P) enthalten sind, die jede Linie in der Schale (T) bilden, wodurch eine Vielzahl der genannten Einheiten im gleichen Apparat kombiniert vorhanden sind, deren gemeinsame Steuerorgane parallel arbeiten, und zwar alle mit der gleichen Größe in Querrichtung und geeignet für die gleichzeitige Anordnung einzelner Samen an jeder Stelle (P) durch geformte Führungsleitungen (19) von unterschiedlicher Länge.

11. Ein Apparat nach einem oder mehreren der vorherigen Ansprüche, **dadurch gekennzeichnet,** daß jede der genannten Düsen (5) am Ende eine Öffnung besitzt, deren Größe geringer ist als die der Samen (S), mit einem Durchmesser, der höchstens 2/3 des durchschnittlichen Durchmessers der Samen entspricht.

Fig.1

_Fig.2a_

_Fig.2b_

_Fig.3_